# EUROPEAN PATENT SPECIFICATION

(11) **EP 1 405 770 B1**
(45) Date of publication and mention of the grant of the patent: **01.03.2006**
(21) Application number: 03028624.9
(22) Date of filing: 13.08.2002
(51) Int. Cl.: B60R 21/16

(54) **Air bag device**
Gassackvorrichtung
Sac gonflable

(30) Priority: 17.08.2001 JP 2001247810
(43) Date of publication of application: 07.04.2004
(62) Divisional of application: 02018106.1
(73) Proprietor: TAKATA CORPORATION, Minato-ku, Tokyo 106-8510 (JP)
(72) Inventor: Yoshida, Ryoichi, Tokyo 106-8510 (JP)
(74) Representative: Banzer, Hans-Jörg

(56) References cited:
- DE-U- 20 101 934
- US-A- 3 642 303
- US-A- 5 562 302
- US-A- 5 566 972
- US-A- 5 593 179

## Description

### [Technical Field of the Invention]

The present invention relates to an air bag device that protects an occupant by deploying an air bag in the case of a vehicle collision. More particularly, the present invention relates to an air bag device that can quickly deploy an air bag into an adequate shape even with a low-output inflator.

### [Background and Problems to be Solved by the Invention]

Air bag devices, such as a driver-side air bag device, a passenger-side air bag device, a rear-side air bag device, and a side-protection air bag device, are used in order to protect the occupant in a vehicle collision. The entirety of the passenger-side air bag device of the various air bag devices is stored in an instrument panel disposed at the front of the cabin.

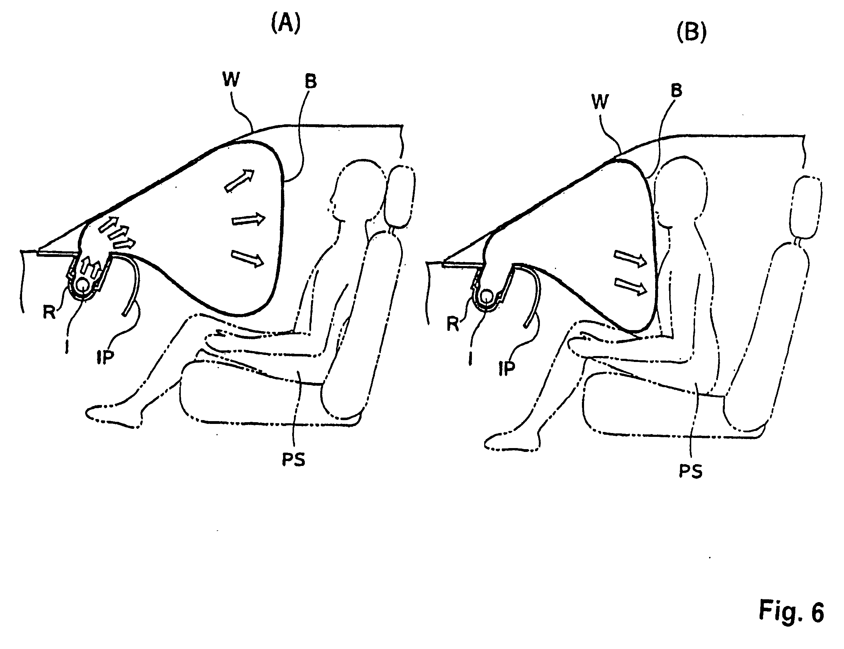

Figs. 6(A) and 6(B) are schematic side views explaining a deployment manner of a currently typical passenger-side air bag device. Fig. 6(A) shows a state during deployment, and Fig. 6(B) shows a state in which the passenger abuts against a deployed air bag.

The air bag device shown in Fig. 6 includes a retainer R that is placed in the upper part of an instrument panel IP of a vehicle so as to face a windshield W. A bag-shaped bag body B, and an inflator I for supplying inflation gas into the bag body B are stored in the retainer R. The bag body B is normally folded and stored in the retainer R.

Typically, the capacity of the deployed bag body B is 100 to 130 liters. The inflator I can supply 400 to 550 kPa of inflation gas in the case of a 60-liter tank.

The air bag device shown in Fig. 6 operates as follows:

When inflation gas is supplied from the inflator I into the bag body B in a vehicle collision, the upper part of the bag body B expands out along the windshield W of the vehicle, and the lower part of the bag body B is deployed close to the femoral region of a passenger PS, as shown in Fig. 6(A). The bag body B is completely deployed after a predetermined time elapses, and the passenger PS that is moving forward because of inertia abuts against the deployed bag body B, as shown in Fig. 6(B). After that, the inertial force of the body of the passenger PS is absorbed by the bag body B.

The passenger-side bag has a capacity larger than that of the driver-side bag (approximately double). The inflator for promptly deploying the passenger-side bag is required to produce an output higher than that for the driver-side bag. However, in a case in which an obstacle exists just behind the instrument panel IP, impact applied to the obstacle during deployment increases as the output of the inflator increases.

Accordingly, it is thought to simply decrease the output of the inflator of the air bag device in order to reduce the impact. However, when only the inflator output is decreased without changing the other structures of the air bag device, the following problem arises.

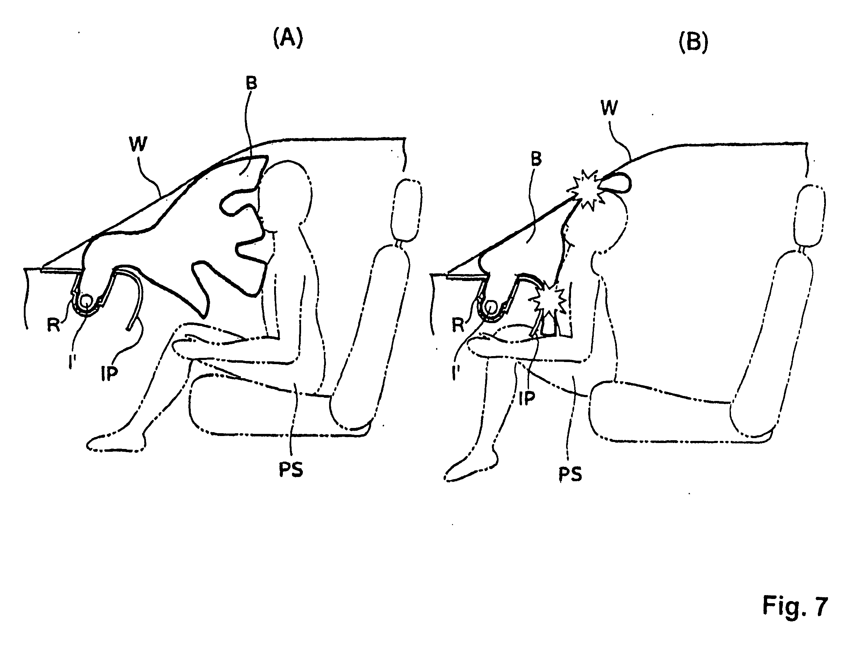

Figs. 7(A) and 7(B) are schematic side views explaining a deployment manner of a passenger-side air bag in which the output of the inflator is intentionally decreased. Fig. 7(A) shows a state during deployment, and Fig. 7(B) shows a state in which the passenger advances toward the air bag that is being deployed.

The operation and problem of the air bag device shown in Fig. 7 in which the inflator output is decreased are as follows:

In a vehicle collision, inflation gas is supplied from an inflator I' into a bag body B. Even though the bag body B is deployed in a range from the head to the waist of the passenger PS, as shown in Fig. 7(A), it is not yet completely deployed by the time when the passenger PS advances thereto in the case in which the inflator output is decreased. For this reason, in the worst case, the inertial force of the passenger PS may not be sufficiently absorbed, as shown in Fig. 7(B).

U. S. Patent No. 3,642,303 discloses an air bag having a lower bag segment and an upper bag segment according to the preamble of claim 1.

The bag of this air bag device has a structure in which a head bag (upper bag segment) is placed on a torso bag (lower bag segment) with an orifice therebetween. When the bag is inflated, the trunk of a passenger first abuts against the torso bag, and the impact applied in this case causes inflation gas in the torso bag to flow into the head bag through the orifice. It is taught that this permits efficient use of the gas.

The present invention has been made in view of such a background, and an object of the invention is to provide an air bag device that can quickly deploy an air bag into an adequate shape even with a low-output inflator.

### [Means for Solving the Problems]

According to the present invention, this object is achieved by an airbag device as defined in claim 1. The dependent claims define advantageous and preferred embodiments of the present invention.

In order to overcome the above problem, an air bag device of the present invention includes an air bag that is deployed in front of a passenger's seat of a car, and an inflator for injecting gas to deploy the air bag, wherein the air bag includes a lower bag segment for holding the shoulders and chest of an adult passenger when it is deployed, an upper bag segment that rises from the lower bag segment so as to hold the head of the adult passenger when it is deployed, and a partition cloth having an inner vent hole for separating the bag segments, and inflation gas from the inflator is directly supplied to the lower bag segment, and is supplied to the upper bag segment through the inner vent hole.

In the air bag device of the present invention, when the bag is deployed, the lower bag segment is first inflated so as to hold the shoulders and chest of the adult passenger and to inhibit the passenger from advancing. For this reason, the degree of effectiveness of inhibiting the advance of the passenger is higher than that in the device disclosed in U.S. Patent No. 3,624,303 in which the lower bag segment abuts against the abdomen of the adult passenger. The upper bag segment is deployed by gas supplied via the lower bag segment and the inner vent hole. The gas contains gas that is transferred from the lower bag segment pressed and squashed by the passenger into the upper bag segment. Such a mechanism makes it possible to more reliably restrain the passenger even when the inflator output is low, than in the general air bag device.

In the air bag device of the present invention, it is preferable that the capacity of the lower bag segment when deployed be 60 to 90 liters.

In this case, the lower bag segment can be deployed at high speed even with a low-output inflator by making the capacity of the lower bag segment relatively small.

In the air bag device of the present invention, it is preferable that the output of the inflator be 300 to 400 kPa in a case in which an emitting portion has a capacity of 60 liters.

In this case, impact on an obstacle due to bag deployment can be reduced by setting the output of the inflator low.

In the air bag device of the present invention, it is preferable that the upper bag segment be shaped like an up-pointing triangular prism and have a capacity of 20 to 40 liters when it is deployed, and that a space be formed between the front side of the deployed bag and a windshield.

In this case, the output of the inflator can be further decreased by reducing the capacity of the upper bag segment.

In the air bag device of the present invention, a plurality of inner vent holes are formed in the rear side of the partition cloth so as to be spaced from one another in the rightward-leftward direction, and the upper bag segment may have a gas-discharging vent hole.

In this case, since a gas-discharging path can be secured from the lower bag segment to the upper bag segment through the gas-discharging vent hole in a relatively early stage of the bag deployment, impact caused when the bag abuts the obstacle during deployment can be reduced.

In the air bag device of the present invention, it is preferable that a rear surface of the upper bag segment be disposed slightly offset from a rear surface of the lower bag segment toward the front side when said air bag is deployed. Consequently, a head-restraining surface of the upper bag segment is placed ahead of a shoulder/chest-restraining surface of the lower bag segment.

In this case, the lower bag segment is first deployed so as to restrain the shoulders and chest of the passenger, and an area (squashed area) of the lower bag segment on the rear side of the upper bag segment rear surface starts to be squashed. The gas pressed by the squashed area flows into the upper bag segment through the inner vent hole, so that the upper bag segment is gradually deployed. Since the rear surface of the upper bag segment is disposed slightly offset to the front, when the upper bag segment is almost completely deployed, the head of the passenger is brought into contact with the upper bag segment, and is received by the soft upper bag segment. While the passenger is advancing, the lower bag segment is further squashed, and the gas continuously flows into the upper bag segment. Gas unnecessary to restrain the head of the passenger is discharged out from the vent holes formed in the right and left side faces of the upper bag segment. Consequently, the deployed upper bag segment remains soft and can softly restrain the head of the passenger.

In the air bag device of the present invention, the air bag may be folded so that the base portion is offset to the rear side, and the other portions are folded up like a concertina in front of the base portion.

In this case, when the air bag hits an obstacle during deployment, the leading end of the bag can easily pass between the obstacle and the windshield. For this reason, impact on the obstacle is reduced.

In the air bag device of the present invention, the base portion on the lower side of the lower bag segment of the air bag may have a gas-discharging vent hole. The above-described folding manner makes it possible to preferentially deploy the air bag from the rear side of the base portion.

In this case, since the gas is discharged out of the bag through the vent hole so as to reduce the impact due to bag deployment when normal bag deployment is obstructed, it is possible to reduce the impact on the obstacle existing in the bag deploying direction due to the bag deployment. In contrast, when the bag is normally deployed, the vent hole is covered by being in contact with the upper surface of the instrument panel, and therefore, hardly any gas is lost.

### [Brief Description of the Drawings]

Fig. 1 is a perspective view showing the configuration of an air bag device according to an embodiment of the present invention (when bag deployment is completed).
Fig. 2 is a sectional view showing the configuration of the air bag device (before and at the beginning of bag deployment).
Figs. 3(A) and 3(B) are schematic side views explaining the operation manner of the air bag device of the present invention. Fig. 3(A) shows the initial state of deployment (second stage), and Fig. 3(B) shows a state in which the bag starts to abut the passenger (second stage).
Figs. 4(C) and 4(D) are schematic side views explaining the operation manner of the air bag device. Fig. 4(C) shows a state in which the head of the passenger starts to abut an upper bag segment (third stage), and Fig. 4(D) shows a state in which the advance of the passenger is almost stopped (fourth stage).
Fig. 5 is a schematic side view explaining another operation of the air bag device of the present invention.
Figs. 6(A) and 6(B) are schematic side views explaining a deployment manner of a currently typical passenger-side air bag device. Fig. 6(A) shows a state during deployment, and Fig. 6(B) shows a state in which a passenger abuts a deployed air bag.
Figs. 7(A) and 7(B) are schematic side views explaining a deployment manner of a prevailing passenger-side air bag device in a case in which the inflator output is decreased intentionally. Fig. 7(A) shows a state during deployment, and Fig. 7(B) shows a state in which a passenger advances toward an air bag that is being deployed.

### [Description of the Embodiments]

The following description will be given with reference to the drawings.

In the following description, the upward, downward, rightward, leftward, frontward, and rearward directions are shown by the arrows in the drawings.

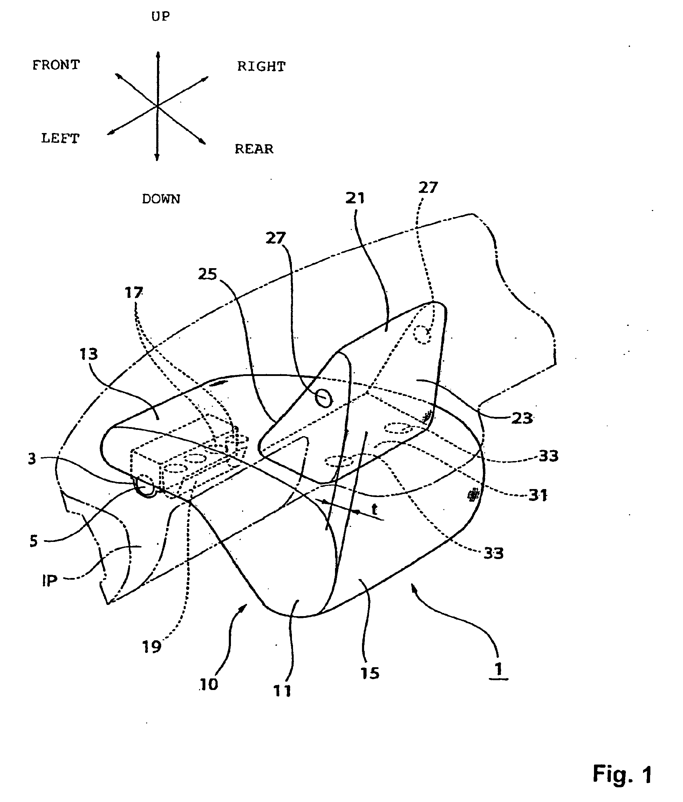

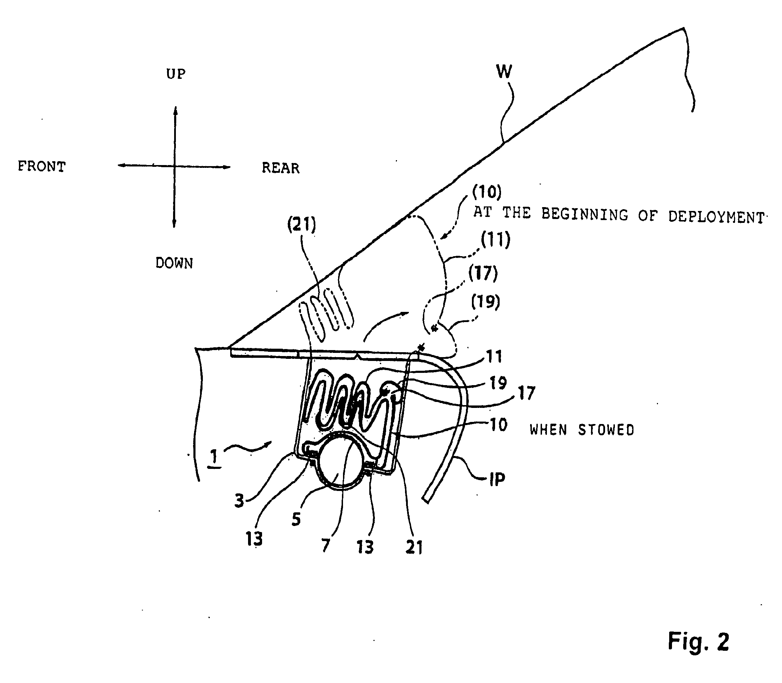

An air bag device 1 of this embodiment is an air bag device for a passenger's seat. As shown in Figs. 1 and 2, a retainer 3 of the air bag device 1 is placed in the upper part of an instrument panel IP of a vehicle so that it faces a windshield W of the vehicle. As shown in Fig. 2, the retainer 3 accommodates a bag-shaped bag body 10 and an inflator 5.

The bag body 10 is shaped like a bag made of nylon or the like. The bag body 10 includes a lower bag segment 11, an upper bag segment 21, and a partition cloth 31 disposed between the bag segments 11 and 21, as shown in Fig. 1.

First, the lower bag segment 11 will be described.

The lower bag segment is shaped like a bag that gradually expands downward from the front to the rear when it is deployed. The capacity of the deployed lower bag segment 11 is 60 to 90 liters. An aperture at a base portion 13 of the lower bag segment 11 is fixed to the bottom of the retainer 3 with a bag plate 7, as shown in Fig. 2. A rear surface 15 of the lower bag segment 11 expands to a position such as to hold the shoulders and chest of an adult passenger during deployment.

Adjacent to the base portion 13 of the lower bag segment 11 close to the passenger, gas-discharging vent holes 17 are formed so as to open downward, as shown in Fig. 1. In this embodiment, four gas-discharging vent holes 17, each having a diameter of 40 to 60 mm, are arranged in the rightward-leftward direction. While the total area of the gas-discharging vent holes 17 may be appropriately changed depending on the inflator output, it is 50 to 120 cm² in this embodiment. As long as the number of the gas-discharging vent holes 17 is at least two, the total area thereof may be appropriately determined within the above range. Of course, when the number is decreased, the aperture area of each vent hole needs to be increased. A hood 19 is sewn to the outer side of the base portion 13 of the lower bag segment 11. The hood 19 is made of the same material as that of the bag body 10, for example, nylon. The hood 19 is inflated in an arch shape outside the vent holes 17 when the gas is discharged. The operations of the vent holes 17 and the hood 19 will be described later.

Next, the upper bag segment 21 will be described.

The upper bag segment 21 is shaped like an up-pointing triangular prism that rises from the lower bag segment 11 when it is deployed. The capacity of the deployed upper bag segment 21 is 20 to 40 liters. A rear surface 23 of the upper bag segment 21 expands to a position such as to hold the head of the adult passenger when the air bag is deployed. When the bag is deployed, the rear surface 23 of the upper bag segment 21 is placed offset by more than 50 mm (a gap "t" in Fig. 1) from the rear surface 15 of the lower bag segment 11 toward the front side. Since this gap "t" is ensured, the upper bag segment 23 does not abut against the passenger's head while it is being deployed, but abuts against the passenger's head when it is almost completely deployed, thereby softly restraining the passenger's head. When the bag is deployed, a space is formed between a front surface 25 (front-side surface) of the upper bag segment 21 and the windshield W. Gas-discharging vent holes 27 (having, for example, a diameter of 50 mm) are formed on right and left upper side faces of the upper bag segment 21.

The partition cloth 31 will now be described.

The partition cloth 31 is positioned so as to separate the lower bag segment 11 and the upper bag segment 21. The partition cloth 31 has inner vent holes 33. The diameter of the inner vent holes 33 is 50 to 70 mm. In this embodiment, two inner vent holes 33 having a diameter of 60 mm are formed on the right and left rear sides with a space therebetween. These inner vent holes 33 serve to absorb the kinetic energy of the passenger by discharging gas therethrough in a normal bag deploying operation, and to secure a gas-discharging path when the bag body 10 abuts against an obstacle during deployment.

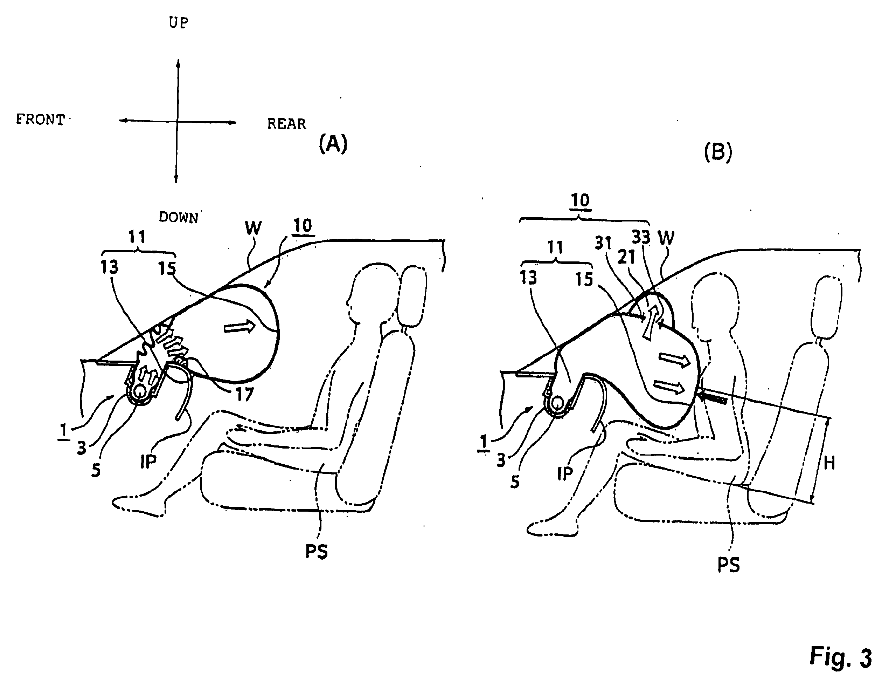

In a folded state (before deployment), as shown in Fig. 2, the bag body 10 having such a configuration is stored so that the base portion 13 of the lower bag segment 11 is offset to the rear side, and the other portions are folded up like a concertina in front of the base portion 13. Such storage manner allows the lower side of the lower bag segment 11 of the bag body 10 to first expand out during deployment, as shown by a two-dot chain line in Fig. 2. The manner of subsequent bag deployment will be described later with reference to Figs. 3 to 5.

Next, the inflator 5 will be described.

The inflator 5 is a device that generates gas for deploying the bag body 10. The output of the inflator 5 is set to be relatively low so that the maximum output is 300 to 400 kPa in a case in which an emitting portion has a capacity of 60 liters. The inflator 5 is shaped like a cylinder having a cylindrical outer peripheral surface, and accommodates propellant (not shown). An initiator (not shown) is connected to the inflator 5. The initiator ignites the propellant inside the inflator 5 in response to an ignition signal from a sensor (not shown). Another type of inflator performs deployment by using a highly pressurized inert gas.

Next, the operation of the air bag device 1 having the above configuration will be described.

In a normal state of the vehicle, the bag body 10 is folded and stored in the retainer 3 (see Fig. 2). When the vehicle rapidly decelerates, the sensor (not shown) detects the deceleration and sends an ignition signal to the initiator, the propellant is ignited by the initiator, and inflation gas is generated by the inflator 5. The generated inflation gas is first directly supplied to the lower bag segment 11, and is then supplied to the upper bag segment 21 through the inner vent holes 33 of the partition cloth 31.

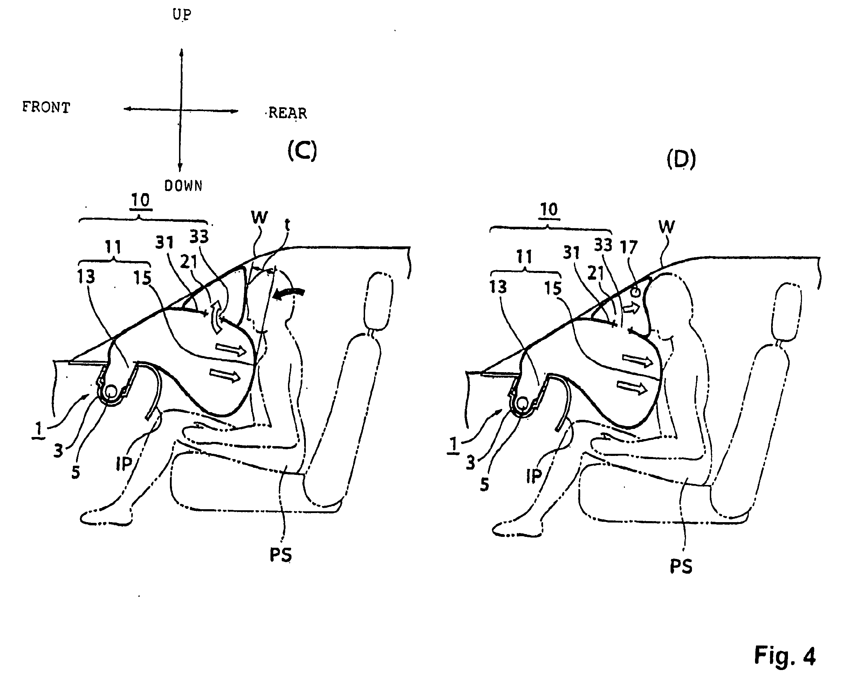

Deployment and operation processes of the bag body 10 in a normal state will be described in detail below with reference to Figs. 3 and 4. It is assumed that a passenger PS is an adult, and does not wear the seat belt.

Figs. 3(A) and 3(B) are schematic side views explaining the operation manner of the air bag device of the present invention. Fig. 3(A) shows the initial state of deployment (first stage), and Fig. 3(B) shows a state in which the bag starts to abut against the passenger (second stage).

Figs. 4(C) and 4(D) are schematic side views explaining the operation manner of the air bag device of the present invention. Fig. 4(C) shows a state in which the passenger's head starts to abut against the upper bag segment (third stage), and Fig. 4(D) shows a state in which the advance of the passenger is almost stopped (fourth stage).

### First Stage

As shown in Fig. 3(A), the folded bag body 10 protrudes above the instrument panel IP, and starts to be deployed to the rear side. In this case, since the gas-discharging vent holes 17 in the base portion 13 of lower bag segment 11 close to the passenger are covered by being in contact with the upper surface of the instrument panel IP, hardly any gas is lost from the vent holes 17.

### Second Stage

As shown in Fig. 3(B), the lower bag segment 11 is first quickly inflated, and expands toward the shoulders and chest of the adult passenger PS, and the lower bag segment rear surface 15 abuts against the shoulders and chest of the passenger PS. Since the shoulders and chest are thereby inhibited from moving forward, the passenger's head cannot easily approach the windshield W. The upper bag segment 21 starts to be deployed by the addition of gas supplied from the lower bag segment 11 pressed and squashed by the shoulders and chest of the passenger PS through the inner vent holes 33 of the partition cloth 31.

### Third Stage

As shown in Fig. 4(C), the bag body 10 is almost completely deployed, and the head of the passenger PS starts to abut against the upper bag segment 21. In this case, since the gap "t" (see Fig. 1) is ensured between the rear surface 15 of the lower bag segment 11 and the rear surface 23 of the upper bag segment 21, the upper bag segment 23 does not abut against the passenger's head while it is being deployed, but abuts against the passenger's head when it is almost completely deployed, thereby softly restraining the passenger's head.

### Fourth Stage

As shown in Fig. 4(D), the bag body 10 is pressed and squashed by the passenger PS who is advancing further, the gas is discharged from the gas-discharging vent holes 27 formed on both sides of the upper bag segment 21, and the advancing energy of the passenger PS is absorbed, so that the advance of the passenger PS is stopped. Some gas is discharged from the gas-discharging vent holes 27, the passenger's head softly abuts the upper bag segment 21.

In this way, the air bag device 1 of this embodiment can properly deploy the bag body 10 even with the low-output inflator whose maximum output is 300 to 400 kPa so as to properly restrain the passenger PS in a vehicle collision.

The air bag device 1 of the present invention also properly operates, for example, in a condition in which an obstacle is placed in front of the passenger's seat of the vehicle, as will be described below. The operation of the air bag device 1 will be described below, assuming such a condition.

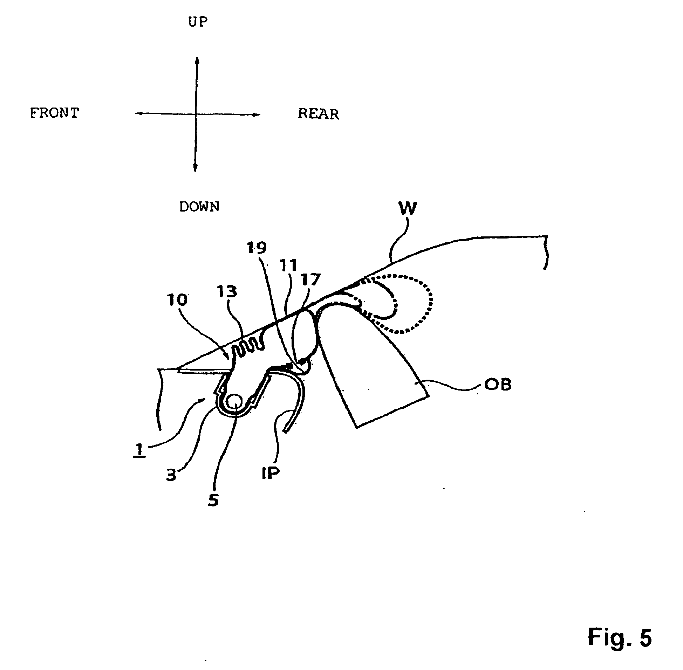

Fig. 5 is a schematic side view explaining the other operation of the air bag device of the present invention.

As shown in Fig. 5, it is assumed that an object OB is placed just in front of the instrument panel IP that is disposed in front of the passenger's seat of the vehicle in a state in which the vehicle rapidly decelerates. When the air bag device 1 is actuated, the bag body 10 folded and stored in the retainer 3 first protrudes above the instrument panel IP (shown by a solid line in Fig. 5). Then, a lower portion of the lower bag segment 11 of the bag body 10 relatively close to the base portion 13 abuts a front upper portion of the object OB at the beginning of the deployment, and the normal bag deployment is obstructed. In this case, the gas-discharging vent holes 17 in the base portion 13 of the lower bag segment 11 are still open without being in contact with the upper surface of the instrument panel IP, and therefore, the gas is discharged out of the bag through the vent holes 17, so that the bag deploying force is decreased, and the impact on the object OB is reduce.

Subsequently, the portions of the lower bag segment 11 folded like a concertina sequentially pass between the top of the object OB and the windshield W by the action of a folding characteristic during storage, and the bag body 10 is deployed in the order shown by a one-dot chain line, a two-dot chain line, and a dot line in Fig. 5. Since the deployment is carried out in such an order, impact on the object OB due to the bag deployment is reduced, and the object OB hardly rebounds. The folding manner of the bag body 10 is not limited to that shown in Fig. 2, and any folding manner may be adopted as long as a portion of the bag having the gas-discharging vent holes 17 fixed to the retainer 3 close to the passenger is first deployed.

The air bag device of the present invention can serve as a multistage inflation system in combination with a weight sensor and a crash severity sensor. The gas charge rate is set low for infants and children, and is set high for adult passengers. Alternatively, the gas charge rate may be set relatively low when the vehicle speed is low (deployment with a low ON-SET rate), and may be set high when the vehicle speed is medium to high (deployment with a high ON-SET rate). The air bag device may be used in combination with a seating sensor, a capacitive sensor, an image processing system, and the like.

### [Advantages]

As is obvious from the above description, the present invention can provide the air bag device that can quickly deploy the air bag into an adequate shape even with the low-output inflator.

## Claims

1. An air bag device (1), comprising:
an air bag (10) to be deployed in front of a passenger's (PS) seat of a car, wherein said air bag (10) comprises:
a lower bag segment (11) for holding the shoulders and chest of an adult passenger (PS) when it is deployed,
an upper bag segment (21) that rises from said lower bag segment (11) so as to hold the head of the adult passenger (PS) when it is deployed, said upper bag segment (21) having a gas-discharging vent hole (27), and
a partition cloth (31) having an inner vent hole (33) for separating said upper and lower bag segments (11, 21); and
an inflator (5) for injecting inflation gas to deploy said air bag (10), wherein the inflation gas from said inflator (5) is directly supplied to said lower bag segment (11) and is supplied to said upper bag segment (21) through said inner vent hole (33),
**characterized in that**
a plurality of said inner vent holes (33) are formed in the rear side portion of said partition cloth (31) so as to be spaced from one another in the rightward-leftward direction.

2. An air bag device (1) according to claim 1, wherein, the capacity of said lower bag segment (11) when deployed is 60 to 90 liters.

3. An air bag device (1) according to claim 1 or 2, wherein, when said upper bag segment (21) is deployed, it is shaped like an up-pointing triangular prism, and has a capacity of 20 to 40 liters, and a space is formed between the front side of said upper bag segment (21) and a windshield (W).

4. An air bag device (1) according to any one of claims 1 to 3, wherein a rear surface (23) of said upper bag segment (21) is disposed slightly offset from a rear surface (15) of said lower bag segment (11) toward the front side when said air bag (10) is deployed.

5. An air bag device (1) according to any one of claims 1 to 4, wherein gas-discharging vent holes (27) are formed in right and left side faces of said upper bag segment (21).

6. An air bag device (1) according to any one of claims 1 to 5, wherein said air bag is folded so that a base portion (13) is offset to the rear side, and the other portions are folded up like a concertina in front of said base portion (13).

7. An air bag device (1) according to any one of claims 1 to 6, wherein a gas-discharging vent hole (17) is formed on the rear side of a base portion (13) of said air bag (10), and said air bag (10) is preferentially deployed from the rear side of said base portion (13).

## Patentansprüche

1. Airbagvorrichtung (1) umfassend:
einen Airbag (10), welcher vor einem Sitz eines Insassen (PS) eines Autos zu entfalten ist und wobei der Airbag (10) umfasst:
einen unteren Airbag-Abschnitt (11), um die Schultern und die Brust eines erwachsenen Insassen (PS) zu halten, wenn er entfaltet wird,
einen oberen Airbag-Abschnitt (21), welcher sich von dem unteren Airbag-Abschnitt (11) erhebt, um so den Kopf des erwachsenen Insassen (PS) zu halten, wenn er entfaltet wird, wobei der obere Airbag-Abschnitt (21) ein Gasentladungslüftungsloch (27) aufweist, und
einen Teilungsstoff (31), welcher ein inneres Lüftungsloch (33) aufweist, um den oberen und den unteren Airbag-Abschnitt (11, 21) zu trennen; und
eine Aufblasvorrichtung (5), um Füllgas einzublasen, um den Airbag (10) zu entfalten, wobei das Füllgas von der Aufblasvorrichtung (5) direkt dem unteren Airbag-Abschnitt (11) zugeführt wird und dem oberen Airbag-Abschnitt (21) durch das innere Lüftungsloch (33) zugeführt wird,
**dadurch gekennzeichnet,**
**dass** eine Mehrzahl der inneren Entlüftungslöcher (33) in dem rückseitigen Abschnitt des Teilungsstoffs (31) derart ausgebildet ist, so dass sie in der Rechts-Links-Richtung voneinander beabstandet sind.

2. Airbagvorrichtung (1) nach Anspruch 1, wobei die Kapazität des unteren Airbag-Abschnitts (11), wenn er entfaltet ist, 60 bis 90 Liter beträgt.

3. Airbagvorrichtung (1) nach Anspruch 1 oder 2, wobei, wenn der obere Airbag-Abschnitt (21) entfaltet ist, dieser wie ein nach oben zeigendes dreieckiges Prisma geformt ist und eine Kapazität von 20 bis 40 Liter aufweist und ein Zwischenraum zwischen der Vorderseite des oberen Airbag-Abschnitts (21) und einer Windschutzscheibe (VV) ausgebildet ist.

4. Airbagvorrichtung (1) nach einem der Ansprüche 1 bis 3, wobei eine rückseitige Oberfläche (23) des oberen Airbag-Abschnitts (21) etwas abgesetzt von einer rückseitigen Oberfläche (15) des unteren Airbag-Abschnitts (11) zu der Vorderseite versetzt ist, wenn der Airbag (10) entfaltet ist.

5. Airbagvorrichtung (1) nach einem der Ansprüche 1 bis 4, wobei die Gasentladungslüftungslöcher (27) in rechten und linken Seitenflächen des oberen Airbag-Abschnitts (21) ausgebildet sind.

6. Airbagvorrichtung (1) nach einem der Ansprüche 1 bis 5, wobei der Airbag derart gefaltet ist, dass ein Basisabschnitt (13) zu der Rückseite versetzt ist und dass die anderen Abschnitte vor dem Basisabschnitt (13) wie eine Ziehharmonika zusammengefaltet sind.

7. Airbagvorrichtung (1) nach einem der Ansprüche 1 bis 6, wobei ein Gasentladungslüftungsloch (17) auf der Rückseite eines Basisabschnittes (13) des Airbags (10) ausgebildet ist und der Airbag (10) vorzugsweise von der Rückseite des Basisabschnitts (13) entfaltet wird.

## Revendications

1. Dispositif de coussin de sécurité gonflable (1), comprenant :
- un coussin gonflable (10) devant être déployé devant un siège passager avant (PS) de voiture, dans lequel ledit coussin gonflable (10) comprend :
- un segment de coussin inférieur (11) destiné à maintenir les épaules et la poitrine d'un passager adulte (PS) lorsqu'il est déployé,
- un segment de coussin supérieur (21) qui s'élève à partir dudit segment de coussin inférieur (11) de façon à maintenir la tête du passager adulte (PS) lorsqu'il est déployé, ledit segment de coussin supérieur (21) ayant un évent de décharge gazeuse (27), et
- une toile servant de cloison de séparation (31) ayant un évent interne (33) destinée à séparer lesdits segments de coussin supérieur et inférieur (11, 21) ; et
- un générateur de gaz (5) destiné à injecter un gaz de gonflage afin de déployer ledit coussin gonflable (10), dans lequel le gaz de gonflage dudit générateur de gaz (5) est directement amené dans ledit segment de coussin inférieur (11) et est amené dans ledit segment de coussin supérieur (21) au moyen dudit évent interne (33),
**caractérisé en ce que**
- une pluralité desdits évents internes (33) sont formés sur la position latérale arrière de ladite toile servant de cloison de séparation (31) de façon à être espacés les uns des autres à droite comme à gauche.

2. Dispositif de coussin de sécurité gonflable (1) selon la revendication 1, dans lequel la capacité dudit segment de coussin inférieur (11) lorsqu'il est déployé est de 60 à 90 litres.

3. Dispositif de coussin de sécurité gonflable (1) selon la revendication 1 ou 2, dans lequel, lorsque ledit segment de coussin supérieur (21) est déployé, il prend la forme d'un prisme triangulaire pointant vers le haut, et il a une capacité de 20 à 40 litres, et un espace est formé entre le côté avant dudit segment de coussin supérieur (21) et un pare-brise (W).

4. Dispositif de coussin de sécurité gonflable (1) selon l'une quelconque des revendications 1 à 3, dans lequel une surface arrière (23) dudit segment de coussin supérieur (21) est déployée de manière légèrement décalée par rapport à une surface arrière (15) dudit segment de coussin inférieur (11) vers le côté avant lorsque ledit coussin gonflable (10) est déployé.

5. Dispositif de coussin de sécurité gonflable (1) selon l'une quelconque des revendications 1 à 4, dans lequel les évents de décharge gazeuse (27) sont formés sur les faces latérales droite et gauche dudit segment de coussin supérieur (21).

6. Dispositif de coussin de sécurité gonflable (1) selon l'une quelconque des revendications 1 à 5, dans lequel le coussin gonflable est plié de telle sorte qu'une partie de base (13) soit décalée vers le côté arrière, et les autres parties sont pliées en accordéon devant ladite partie de base (13).

7. Dispositif de coussin de sécurité gonflable (1) selon l'une quelconque des revendications 1 à 6, dans lequel un évent de décharge gazeuse (17) est formé sur le côté arrière de la partie de base (13) dudit coussin gonflable (10), et ledit coussin gonflable (10) est de préférence déployé à partir du côté arrière de ladite partie de base (13).
